# EUROPÄISCHE PATENTSCHRIFT

(11) **EP 0 682 037 B1**
(45) Veröffentlichungstag und Bekanntmachung des Hinweises auf die Patenterteilung: **12.12.2001**
(21) Anmeldenummer: 95106774.3
(22) Anmeldetag: 05.05.1995
(51) Int. Cl.: C07F 17/00, C08F 10/00

(54) **Verfahren zur Herstellung von verbrückten Halbsandwichkomplexen**
Process for the preparation of bridged half-sandwich complexes
Procédé de préparation de complexes du type sandwich partiel ponté

(30) Priorität: 13.05.1994 DE 4416876
(43) Veröffentlichungstag der Anmeldung: 15.11.1995
(73) Patentinhaber: BASF Aktiengesellschaft, 67063 Ludwigshafen (DE)
(72) Erfinder: Langhauser, Franz, Dr., D-67098 Bad Dürkheim (DE); Müller, Hans-Joachim, Dr., D-67269 Grünstadt (DE); Kerth, Jürgen, Dr., D-67316 Carlsberg (DE); Schweier, Günther, Dr., D-67159 Friedelsheim (DE); Rieger, Bernhard, Dr., D-72147 Nehren (DE)

(56) Entgegenhaltungen:
- EP-A- 0 416 815

## Beschreibung

Die vorliegende Erfindung betrifft Verfahren zur Herstellung von verbruckten Halbsandwichkomplexen.

Verbrückte Halbsandwichkomplexe eignen sich als Katalysatoren bei der Herstellung von Polyolefinen.

In der EP-A 416 815 und in der US-A 5 055 438 sind verbrückte Halbsandwichkomplexe und Verfahren zu ihrer Herstellung beschrieben. Nach diesen Verfahren werden zunächst Cyclopentadienide hergestellt und isoliert. Diese Salze werden dann als Feststoff oder Schlemme langsam zu einer Lösung von Dimethylchlorsilan in THF gegeben. Anschließend wird das resultierende Chlorsilan in Aliphaten zum erwünschten Liganden umgesetzt. Die Dosierung dieses sehr luftempfindlichen Li-Salzes ist präparativ sehr anspruchsvoll, die Ausbeuten an Ligand sind oftmals unbefriedigend.

Aufgabe der vorliegenden Erfindung war es daher, ein Verfahren zur Herstellung von verbrückten Halbsandwichkomplexen zur Verfügung zu stellen, welches gegenüber dem beschriebenen Stand der Technik einen effizienteren (d.h. bessere Ausbeute) und präparativ einfacheren Zugang zu verbrückten Halbsandwichkomplexen ermöglicht.

Demgemäß wurde ein Verfahren zur Herstellung von verbrückten Halbsandwichkomplexen der allgemeinen Formel I 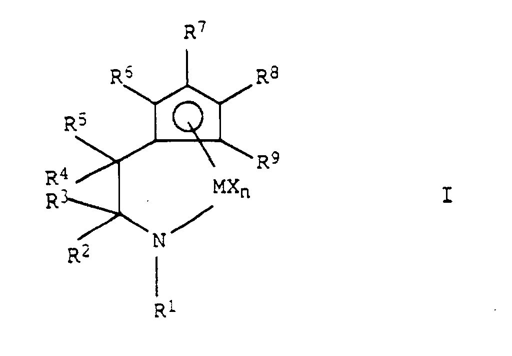 in der die Substituenten und Indices die folgende Bedeutung haben:
- M: ein Metall der IV. oder V. Nebengruppe des Periodensystems oder ein Metall aus der Gruppe der Lanthanide,
- X: Halogen, Wasserstoff, C₁ - bis C₁₀-Alkyl, C₃- bis C₁₀-Cycloalkyl, C₆- bis C₁₅-Aryl, Alkylaryl mit 7 bis 15 C-Atomen oder -OR¹⁰,
- wobei R¹⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
- n': Wertigkeit von M abzüglich der Zahl zwei,
- R¹: Wasserstoff, C₁- bis C₁₀-Alkyl, C₃- bis C₁₀-Cycloalkyl, das seinerseits C₁- bis C₁₀-Alkylgruppen als Substituenten tragen kann, C₆- bis C₁₅-Aryl oder Arylalkyl mit 1 bis 10 C-Atomen im Alkylrest und 6 bis 20 C-Atome im Arylrest oder Si(R¹¹)₃,
- wobei R¹¹: C₁- bis C₁₀-Alkyl, C₆- bis C₁₅-Aryl oder C₃- bis C₁₀-Cycloalkyl bedeutet,
- R² bis R⁹: Wasserstoff, C₁- bis C₁₀-Alkyl, C₃- bis C₁₀-Cycloalkyl, das seinerseits C₁- bis C₁₀-Alkylgruppen als Substituenten tragen kann, C₆- bis C₁₅-Aryl oder Arylalkyl mit 1 bis 10 C-Atomen im Alkylrest und 6 bis 20 C-Atome im Arylrest, wobei gegebenenfalls auch zwei benachbarte Reste gemeinsam für 4 bis 15 C-Atome aufweisende cyclische Gruppen stehen können, oder Si(R¹²)₃,
- wobei R¹²: C₁- bis C₁₀-Alkyl, C₆- bis C₁₅-Aryl oder C₃- bis C₁₀-Cycloalkyl bedeutet,
gefunden, wobei in einem ersten Schritt Cyclopentadienide der allgemeinen Formel II 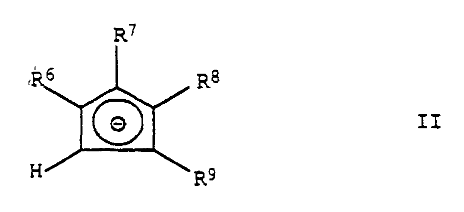 mit Aziridinen der allgemeinen Formel III 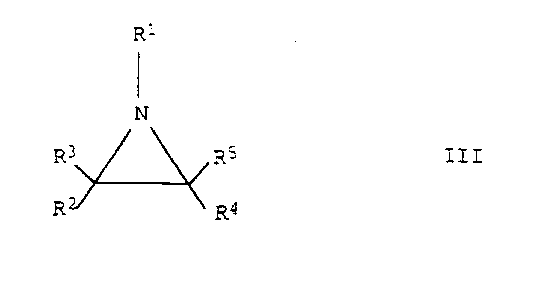 zu Ligandensystemen der allgemeinen Formel IV 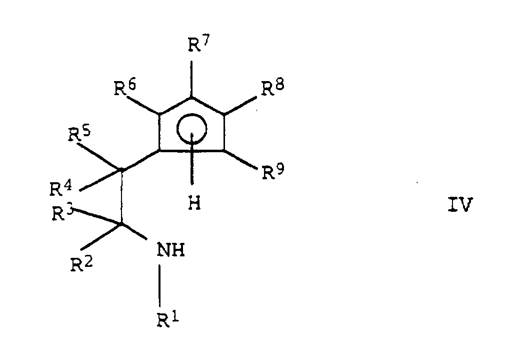 umgesetzt werden und anschließend die Ligandensysteme der allgemeinen Formel IV mit metallierenden Agenzien und MXₙ₊₂ umgesetzt werden.

Bevorzugt wird das erfindungsgemäße Verfahren zur Herstellung von verbrückten Halbsandwichkomplexen der allgemeinen Formel I verwendet, in der
- M: für Metalle der IV. Nebengruppe des Periodensystems steht, insbesondere für Titan, Zirkonium oder Hafnium,
- X: für Chlor oder Methyl,
- R¹: C₆- bis C₁₅-Arylgruppen bedeutet, insbesondere Phenyl,
- R² bis R⁹: für Wasserstoff, C₁- bis C₄-Alkyl oder wobei zwei benachbarte Reste wie R² und R³, R³ und R⁴, R⁴ und R⁵ oder R⁶ und R⁷, R⁷ und R⁸, R⁸ und R⁹ für 4 bis 15 C-Atome, bevorzugt für 4 bis 12 C-Atome aufweisende Gruppen stehen.

Beispiele für besonders bevorzugte verbrückte Halbsandwichkomplexe sind u.a.
(Tert. -Butylamido) (Tetramethyl-η⁵-Cyclopentadienyl)-Ethylen-Zirkoniumdichlorid
(Methylamido) (η⁵-Cyclopentadienyl)-Ethylen-Zirkoniumdichlorid
(Phenylamidol(η⁵-Cyclopentadienyl)-Ethylen-Zirkoniumdichlorid
(Phenylamido) (η⁵-Cyclopentadienyl)-1.2.-Dimethylethylen-Zirkoniumdichlorid
(Phenylamido)(η⁵-Cyclopentadienyl)-Ethylen-Zirkoniumdichlorid
(Phenylamido)(Tetramethyl-η⁵-Cyclopentadienyl)-1.2.-Dimethylethylen-Zirkoniumdichlorid
(tert.-Butylamido)(Tetramethyl-η⁵-cyclopentadienyl)-ethylen-titandichlorid
(Phenylamido)(η⁵-fluorenyl)-ethylenzirkondichlorid
(Phenylamido)(η⁵-indenyl)-ethylenzirkondichlorid.

Bei dem erfindungsgemäßen Verfahren werden nun in einem ersten Schritt Cyclopentadienide der allgemeinen Formel II 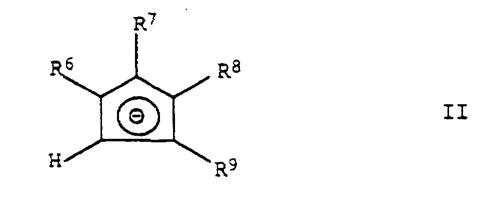 mit Aziridinen der allgemeinen Formel III 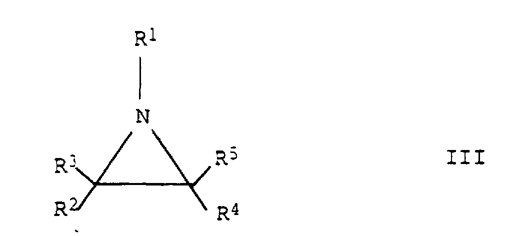 umgesetzt. Bezüglich der bevorzugten Substituenten sei auf das bereits Gesagte verwiesen.

Die Cyclopentadienide II können in Form von Alkalimetallcyclopentadieniden eingesetzt werden, vorzugsweise als Lithium-Verbindungen, wie sie auch im Handel erhältlich sind (beispielsweise Cyclopentadienyl-Lithium der Fa. Fluka).

Die Herstellung der Aziridine III kann nach D.A. Evans, M.M. Faul, M.T. Bilodeau, J. Org. Chem., 1991, 56, S. 6744-6746 erfolgen.

Die Umsetzung der Cyclopentadienide II mit den Aziridinen III erfolgt unter Inertgasatmosphäre. Vorzugsweise legt man die Aziridine vor, insbesondere in einem organischen Lösungsmittel wie Ethern, und gibt dann bei Temperaturen im Bereich von -70°C bis 0°C, insbesondere bis -10°C die Cyclopentadienide II zu. Das Mengenverhältnis von II:III liegt im Bereich von 1:3 bis 3:1, vorzugsweise 2:1 bis 1:2. Anschließend wird auf Temperaturen im Bereich von 10 bis 60°C, vorzugsweise 20 bis 40°C erwärmt und die Reaktionszeit beträgt 2 bis 18 Stunden, bevorzugt 6 bis 15 Stunden. Zur Aufarbeitung werden beispielsweise wäßrige Lösungen von Ammoniumsalzen, vorzugsweise eine gesättigte Ammoniumchloridlösung, zugegeben und das entstandene Ligandensystem IV wird abgetrennt.

Als Aziridine III können Diastereomerengemische eingesetzt werden oder - zur Herstellung von enantiomerenreiner Komplexe I - auch enantiomerenreine Verbindungen.

Die Ligandensysteme IV können als Isomerengemisch oder in Form eines reinen Isomeren vorliegen.

Die Ligandensysteme IV können nun mit metallierenden Agenzien wie Alkali- oder Erdalkalialkylen oder -hydriden, bevorzugt n-Butyllithium versetzt werden. Vorzugsweise werden hierzu die Ligandensysteme IV mit organischen Lösungsmitteln wie Kohlenwasserstoffe versetzt und bei Temperaturen von -10 bis 50°C, insbesondere 15 bis 35°C werden die metallierenden Agenzien hinzugegeben. Bevorzugt sind auch die metallierenden Agenzien mit einem organischen Lösungsmittel, wie Kohlenwasserstoffe, versetzt. Die Mengenverhaltnisse von IV zu den metallierenden Agenzien liegt im Bereich von 1:10 bis 10:1, insbesondere 1:5 bis 5:1. Anschließend wird die Reaktionsmischung auf Temperaturen im Bereich von 30 bis 120°C, bevorzugt 60 bis 80°C erwärmt und das entstandene metallierte Ligandensystem abgetrennt.

Die Umsetzung mit MXₙ₊₂ erfolgt bevorzugt so, daß MXₙ₊₂ oder ein Komplex von MXₙ₊₂ mit einem inerten Lösungsmittel, beispielsweise Ethern, mit einem Lösungsmittel wie Toluol versetzt wird und bei Temperaturen von -80 bis 0°C, insbesondere -60 bis -20°C das metallierte Ligandensystem hinzugegeben wird. Die Mengenverhältnisse von MXₙ₊₂ zu dem metallierten Ligandensystem liegt im Bereich von 2:1 bis 1:2, vorzugsweise 1,5:1 bis 1:1,5. Nach beendeter Zugabe erwärmt man auf 10 bis 50°C, vorzugsweise 20 bis 30°C und läßt 0,1 bis 10 Tage, bevorzugt 2 bis 5 Tage reagieren. Anschließend wird der entstandene verbrückte Halbsandwichkomplex I abgetrennt.

Das erfindungsgemäße Verfahren zeichnet sich durch seine Effizienz sowie durch seine präparative Einfachheit aus, die entstehenden verbrückten Halbsandwichkomplexe eignen sich als Katalysatoren für die Herstellung von Polyolefinen.

### Beispiel 1

Herstellung von (Phenylamido) (η⁵-Cyclopentadienyl)-Ethylen-Zirkoniumdichlorid I1 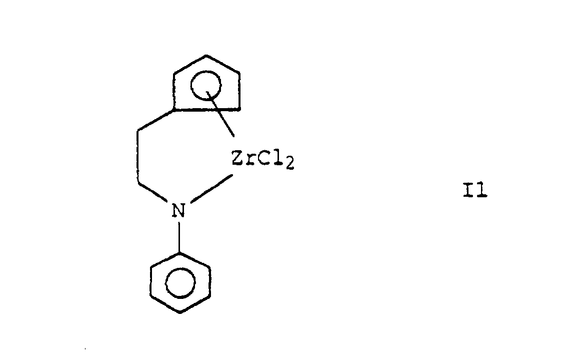
a) Umsetzung von Cyclopentadienyl-Lithium II1 mit N-Phenylaziridin III1 zu 2-(Cyclopentadienyl)ethyl-N-phenyl-amin IV1 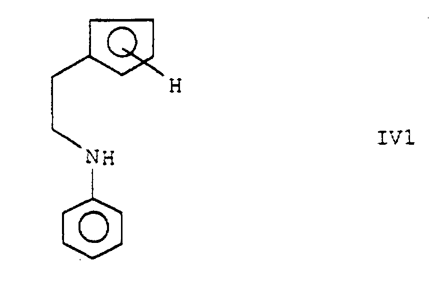 Zu einer Lösung von 0,6 g (≙ 5 mmol) N-Phenylaziridin in 50 ml Tetrahydrofuran (THF) wurden unter Argonatmosphäre bei -30°C in mehreren Portionen 0,36 g (≙ 5 mmol) Cyclopentadienyl-Lithium gegeben. Nach beendeter Zugabe wurde noch 1 Stunde bei -30°C gerührt und dann während 12 Stunden auf Raumtemperatur erwärmt. Dann wurden 50 ml einer gesättigten wäßrigen NH₄Cl-Lösung hinzugegeben, 1 Stunde gerührt und die organische Phase abgetrennt. Diese wurde über wasserfreiem Na₂SO₄ getrocknet, filtriert und das Lösungsmittel am Ölpumpenvakuum entfernt. Man erhielt 0,83 g (≙ 4,5 mmol, 90 % d.Th.) an IV1 als gelbes Öl.

| Elementaranalyse: | | | |
|---|---|---|---|
| ber. | 84,28 C | 8,16 H | 7,56 N |
| gef. | 84,11 C | 8,20 H | 7,44 N |

b) Umsetzung von IV1 mit n-Butyllithium
Zu einer Lösung von 0,83 g (≙ 4,5 mmol) IV1 in 70 ml Pentan wurden unter Argonatmosphäre bei Raumtemperatur 5,6 ml (≙ 9 mmol) einer 1,6 molaren Lösung von n-Butyllithium in Hexan gegeben und nach beendeter Zugabe wurde 3 Stunden bei Raumtemperatur gerührt. Anschließend wurde 1 Stunde am Rückfluß erhitzt, auf -30°C abgekühlt, der weiße Niederschlag abfiltriert und am Ölpumpenvakuum getrocknet. Man erhielt 0,83 g (≙ 4,2 mmol, 93 d.Th.) an metalliertem Ligandensystem.
c) Umsetzung des metallierten Ligandensystems mit ZrCl₄
Zu einer auf -30°C gekühlten Suspension von 0,8 g (≙ 2,1 mmol) ZrCl₄ x 2 THF in 100 ml Toluol wurden unter Argonatmosphäre in mehreren Portionen 0,83 g (≙ 4,2 mmol) des nach b) hergestellten metallierten Ligandensystems gegeben.

Nach beendeter Zugabe wurde auf Raumtemperatur erwärmt und 3 Tage gerührt. Anschließend wurde abfiltriert, der Niederschlag dreimal mit je 50 ml Toluol gewaschen und am Ölpumpenvakuum zur Trockne eingedampft. Der verbliebene Rückstand wurde mit 40 ml Methylenchlorid aufgenommen und bei -78°C auskristallisiert. Man erhielt 0,35 g (≙ 1 mmol, 48 % d.Th.) an I1 als rotoranges, mikrokristallines Pulver.

| Elementaranalyse: | | | | |
|---|---|---|---|---|
| ber. | 45,21 C | 3,79 H | 4,06 N | 26,41 Zr |
| Gef. | 45,00 C | 3,90 H | 4,02 N | 26,20 Zr |

## Patentansprüche

1. Verfahren zur Herstellung von verbrückten Halbsandwichkomplexen der allgemeinen Formel I 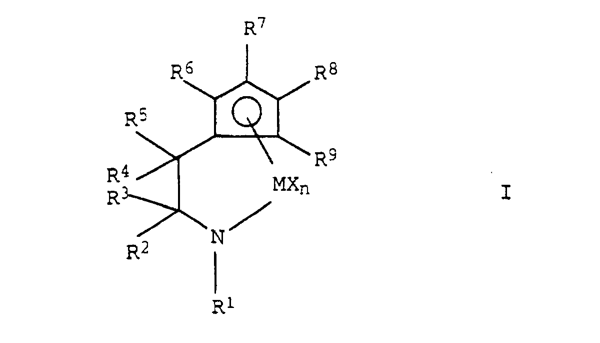 in der die Substituenten und Indices die folgende Bedeutung haben:
M ein Metall der IV. oder V. Nebengruppe des Periodensystems oder ein Metall aus der Gruppe der Lanthanide,
X Halogen, Wasserstoff, C₁- bis C₁₀-Alkyl, C₃- bis C₁₀-Cycloalkyl, C₆- bis C₁₅-Aryl, Alkylaryl mit 7 bis 15 C-Atomen oder -OR¹⁰,
wobei R¹⁰ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
n Wertigkeit von M abzüglich der Zahl zwei,
R¹ Wasserstoff, C₁- bis C₁₀-Alkyl, C₃- bis C₁₀-Cycloalkyl, das seinerseits C₁- bis C₁₀-Alkylgruppen als Substituenten tragen kann, C₆- bis C₁₅-Aryl oder Arylalkyl mit 1 bis 10 C-Atomen im Alkylrest und 6 bis 20 C-Atome im Arylrest oder Si(R¹¹)₃,
wobei R¹¹ C₁- bis C₁₀-Alkyl, C₆- bis C₁₅-Aryl oder C₃- bis C₁₀-Cycloalkyl bedeutet,
R² bis R⁹ Wasserstoff, C₁- bis C₁₀-Alkyl, C₃- bis C₁₀-Cycloalkyl, das seinerseits C₁- bis C₁₀-Alkylgruppen als Substituenten tragen kann, C₆- bis C₁₅-Aryl oder Arylalkyl mit 1 bis 10 C-Atomen im Alkylrest und 6 bis 20 C-Atome im Arylrest, wobei gegebenenfalls auch zwei benachbarte Reste gemeinsam für 4 bis 15 C-Atome aufweisende cyclische Gruppen stehen können, oder Si(R¹²)₃,
wobei R¹² C₁- bis C₁₀-Alkyl, C₆- bis C₁₅-Aryl oder C₃- bis C₁₀-Cycloalkyl bedeutet,
**dadurch gekennzeichnet, daß** in einem ersten Schritt Cyclopentadienide der allgemeinen Formel II 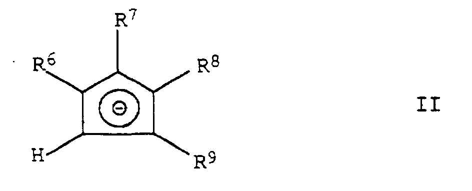 mit Aziridinen der allgemeinen Formel III 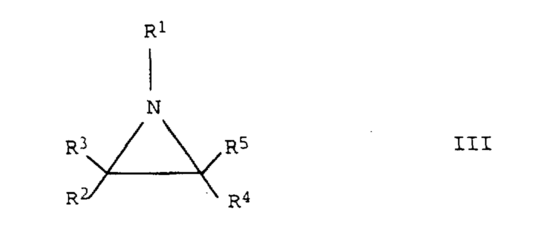 zu Ligandensystemen der allgemeinen Formel IV 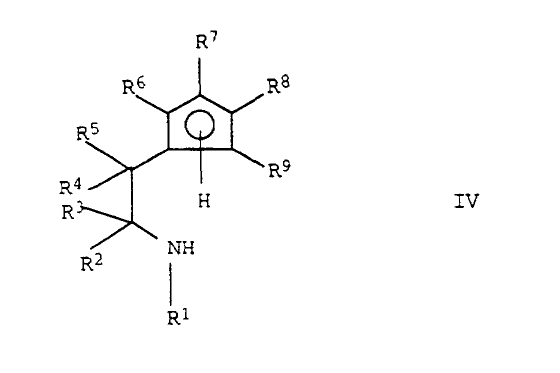 umgesetzt werden und anschließend die Ligandensysteme der allgemeinen Formel IV mit metallierenden Agenzien und MXₙ₊₂ umgesetzt werden.

2. Verfahren nach Anspruch 1, dadurch gekennzeichent, daß M für Metalle der IV. Nebengruppe des Periodensystems steht.

3. Verfahren nach den Ansprüchen 1 bis 2, **dadurch gekennzeichnet, daß** R¹ für C₆- bis C₁₅-Arylgruppen steht.

## Claims

1. A process for preparing bridged half sandwich complexes of the general formula I 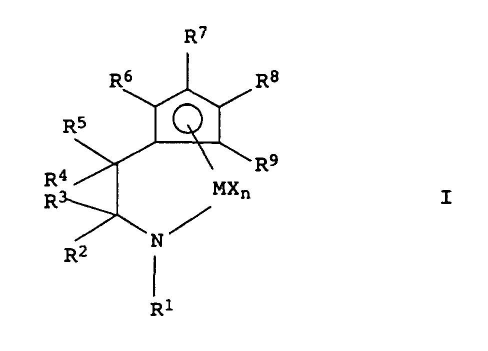 where
M is a metal of Group IVb or Vb of the Periodic Table or a metal from the lanthanide group,
X is halogen, hydrogen, C₁-C₁₀-alkyl, C₃-C₁₀-cycloalkyl, C₆-C₁₅-aryl, alkylaryl having 7 to 15 carbon atoms or -OR¹⁰,
where R¹⁰ is C₁-C₁₀-alkyl, C₆-C₁₅-aryl, alkylaryl, arylalkyl, fluoroalkyl or fluoroaryl having in each case 1 to 10 carbon atoms in the alkyl radical and 6 to 20 carbon atoms in the aryl radical,
n is the valency of M minus two,
R¹. is hydrogen, C₁-C₁₀-alkyl, C₃-C₁₀-cycloalkyl which in turn can carry C₁-C₁₀-alkyl groups as substituents, or C₆-C₁₅-aryl or arylalkyl having 1 to 10 carbon atoms in the alkyl radical and 6 to 20 carbon atoms in the aryl radical or Si(R¹¹)₃,
where R¹¹ is C₁-C₁₀-alkyl, C₆-C₁₅-aryl or C₃-C₁₀-cycloalkyl,
R² to R⁹ are each hydrogen, C₁-C₁₀-alkyl, C₃-C₁₀-cycloalkyl, which in turn can carry C₁-C₁₀-alkyl groups as substituents, or C₆-C₁₅-aryl or arylalkyl having 1 to 10 carbon atoms in the alkyl radical and 6 to 20 carbon atoms in the aryl radical, it also being possible for two adjacent radicals together to be cyclic groups having 4 to 15 carbon atoms, or Si(R¹²)₃,
where R¹² is C₁-C₁₀-alkyl, C₆-C₁₅-aryl or C₃-C₁₀-cycloalkyl,
which comprises in a first step reacting cyclopentadienides of the general formula II 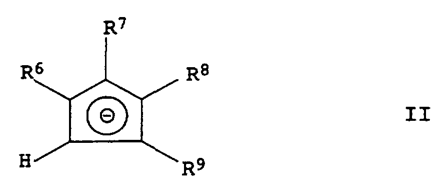 with aziridines of the general formula III 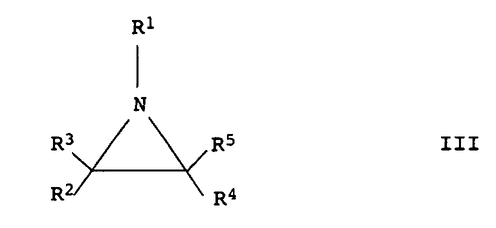 to give ligand systems of the general formula IV 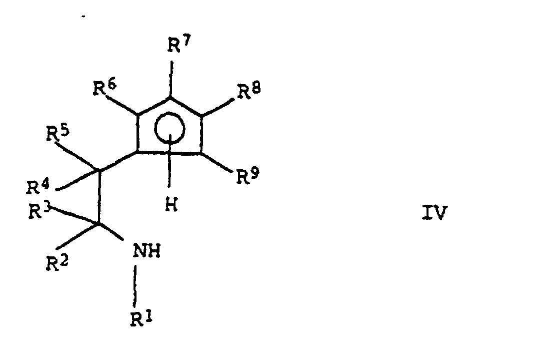 and subsequently reacting the ligand systems of the general formula IV with metallating agents and MXₙ₊₂.

2. A process as claimed in claim 1, wherein M is a metal of group IVb of the Periodic Table.

3. A process as claimed in either of claims 1 and 2, wherein R¹ is C₆-C₁₅-aryl,

## Revendications

1. Procédé de préparation des complexes semi-sandwich pontés de formule générale I 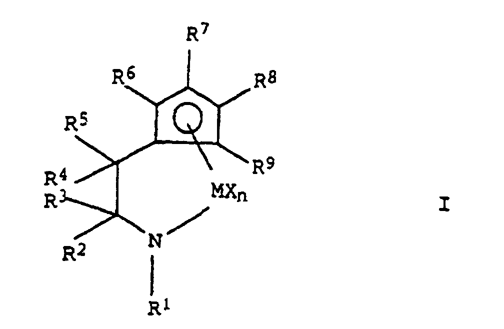 dans laquelle les substituants et les indices prennent les significations suivantes:
M représente un atome de métal du sous-groupe IV ou V de la Classification Périodique des Eléments ou un atome de métal du groupe des lanthanides,
x représente un atome d'halogène ou d'hydrogène, un groupe alkyle en C₁ à C₁₀, cycloalkyle en C₃ à C₁₀, aryle en C₆ à C₁₅, alkylaryle ayant 7 à 15 atomes de C ou -OR¹⁰,
R¹⁰ représentant ici un groupe alkyle en C₁ à C₁₀, aryle en C₆ à C₁₅, alkylaryle, arylalkyle, fluoroalkyle ou fluoroaryle ayant respectivement 1 à 10 atomes de C dans le résidu alkyle et 6 à 20 atomes de C dans le résidu aryle,
n vaut la valeur de M moins le nombre 2,
R¹ représente un atome d'hydrogène, un groupe alkyle en C₁ à C₁₀, cycloalkyle en C₃ à C₁₀ possédant éventuellement des groupes alkyle en C₁ à C₁₀ en tant que substituants, aryle en C₆ à C₁₅ ou arylalkyle ayant 1 à 10 atomes de C dans le résidu alkyle et 6 à 20 atomes de C dans le résidu aryle, ou bien Si(R¹¹)₃,
R¹¹ représentant ici un groupe alkyle en C₁ à C₁₀, aryle en C₆ à C₁₅ ou cycloalkyle en C₃ à C₁₀,
R² à R⁹ représentent un atome d'hydrogène, un groupe alkyle en C₁ à C₁₀, cycloalkyle en C₃ à C₁₀ possédant éventuellement des groupes alkyle en C₁ à C₁₀ en tant que substituants, aryle en C₆ à C₁₅ ou arylalkyle ayant 1 à 10 atomes de C dans le résidu alkyle et 6 à 20 atomes de C dans le résidu aryle, sachant qu'éventuellement deux résidus voisins peuvent représenter conjointement des groupes cycliques ayant 4 à 15 atomes de C, ou bien ils représentent Si(R¹¹)₃,
R¹² représentant ici un groupe alkyle en C₁ à C₁₀, aryle en C₆ à C₁₅ ou cycloalkyle en C₃ à C_{10,}
**caractérisé en ce que** l'on met à réagir dans une première étape des cyclopentadiénides de formule générale II 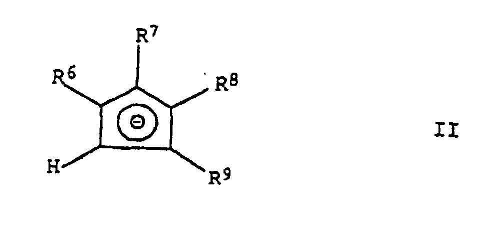 avec des aziridines de formule générale III 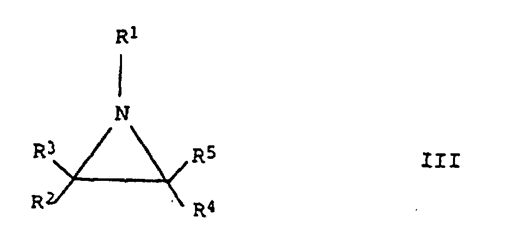 en obtenant des systèmes de ligand de formule générale IV 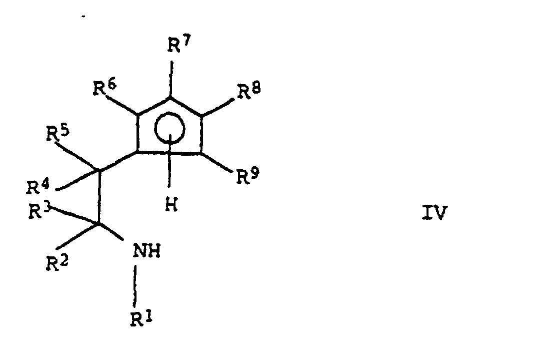 suivi d'une réaction des systèmes de ligand de formule générale IV avec des agents de métallation et avec MXₙ₊₂.

2. Procédé selon la revendication 1, **caractérisé en ce que** M représente un atome de métal du sous-groupe V de la Classification Périodique des Eléments.

3. Procédé selon les revendications 1 à 2, **caractérisé en ce que** R¹ représente un groupe aryle en C₆ à C₁₅.
